**Europäisches Patentamt**

(19) **European Patent Office**

**Office européen des brevets**

(11) Veröffentlichungsnummer: **0 041 212**
**B1**

(12) **EUROPÄISCHE PATENTSCHRIFT**

(45) Veröffentlichungstag der Patentschrift:
**30.11.83**

(51) Int. Cl.³: **C 09 J 1/02**, C 09 D 1/02

(21) Anmeldenummer: **81103992.4**

(22) Anmeldetag: **25.05.81**

(54) **Kleber und/oder Beschichtungsmassen auf Basis von Alkalimetallsilikatlösungen und deren Verwendung.**

(30) Priorität: **02.06.80 DE 3020864**

(43) Veröffentlichungstag der Anmeldung:
**09.12.81 Patentblatt 81/49**

(45) Bekanntmachung des Hinweises auf die Patenterteilung:
**30.11.83 Patentblatt 83/48**

(84) Benannte Vertragsstaaten:
**AT BE CH DE FR GB LI NL SE**

(56) Entgegenhaltungen:
**DE - A - 2 311 745**
**FR - A - 2 219 130**
**FR - A - 2 295 103**
**GB - A - 2 001 333**
**US - A - 3 926 657**

**CHEMICAL ABSTRACTS, Band 90, Nr. 2, Januar 1979,
Seite 78, Zusammenfassung 7770t COLUMBUS OHIO
(US)**
**ILER, The Chemistry of Silica (1979) S. 569, 587, 592**

(73) Patentinhaber: **Henkel Kommanditgesellschaft auf
Aktien, Postfach 1100 Henkelstrasse 67,
D-4000 Düsseldorf-Holthausen (DE)**

(72) Erfinder: **Friedemann, Wolfgang, Dr.,
Stephanusstrasse 14, D-4040 Neuss (DE)**
Erfinder: **Laut, Bernhard, Nordstrasse 14, D-4006 Erkrath
(DE)**

**0 041 212**

### Kleber und/oder Beschichtungsmassen auf Basis von Alkalimetallsilikatlösungen und deren Verwendung

Gegenstand der Erfindung sind Kleber und/oder Beschichtungsmassen auf der Basis wäßriger Alkalimetallsilikatlösungen — das heißt Wasserglaslösungen — mit einem Gehalt an feinteiligen anorganischen Füllstoffen und gegebenenfalls organischen Polymeren. Gegenstand der Erfindung ist ferner die Verwendung derartiger Kleber oder Beschichtungsmassen zum Kleben und/oder Beschichten von Mineralfaserplatten.

Kleber und/oder Beschichtungsmassen — im folgenden auch kurz als Kleber bezeichnet — auf Basis wäßriger Alkalimetallsilikatlösungen sind seit langem bekannt und werden in großem Umfange für die verschiedensten Zwecke in der Praxis eingesetzt. Beispielsweise dienen solche Kleber zur Herstellung von Überzugsmassen, Anstrichmitteln und Kitten sowie zum Verkleben von Holz, Papier, Keramik und mineralischen Isolierstoffen. Insbesondere werden derartige Kleber auch für die Herstellung von mit Metallfolien kaschierten Mineralfaserbahnen oder -platten eingesetzt, die vorzugsweise in der Bauindustrie als Isolier- beziehungsweise Dämmaterialien Verwendung finden.

Bei der Anwendung und Verarbeitung solcher Kleber treten oftmals Probleme in Erscheinung, die einerseits durch ein verfrühtes Erhärten oder durch einen unerwünschten Viskositätsanstieg des Klebers sowie andererseits durch ein Absetzen der in dem Kleber enthaltenen Füllstoffe bedingt sein können. Derartige Effekte mindern in beträchtlichem Maße die Lagerbeständigkeit der Kleber. Darüber hinaus ergeben sich — insbesondere im Zusammenhang mit dem letztgenannten Verwendungszweck — Probleme hinsichtlich der Wasserfestigkeit der Kleber nach dem Trocknen derselben.

Aus der DE-AS 2 460 543 sind Kleber beziehungsweise Beschichtungsmassen auf der Basis von Wasserglas bekannt, die einen Zusatz von tonmineralischen Stoffen — wie Kaolin, Ton oder Talk — sowie von Oxiden oder Carbonaten der Erdalkalien oder des Zinks, von Oxiden oder Hydroxiden des Aluminiums und/oder von Bariumsulfat enthalten. Derartige Massen sind beispielsweise für die Beschichtung von Mineralfaserkörpern geeignet und sollen sich durch geringe Sprödigkeit, gute Verträglichkeit mit Mineralfasern sowie Wasserbeständigkeit auszeichnen.

Demgegenüber wird in der DE-OS 2 729 194 ausgeführt, daß gerade ein Gehalt an Oxiden, Hydroxiden und Carbonaten in solchen Massen deren Lagerbeständigkeit sehr beeinträchtigt, da hierdurch sowohl ein starkes Ansteigen der Viskosität als auch Entmischungserscheinungen, wobei sich die Feststoffe zu einer pastösen Masse absetzen und nur sehr schwierig oder überhaupt nicht mehr in die ursprüngliche Konsistenz überführbar sind, hervorgerufen werden. Demzufolge werden in der DE-OS 2 729 194 Kleber und/oder Beschichtungsmassen für Mineralfasern auf der Basis von Alkalisilikatlösungen beschrieben, die durch einen Gehalt an einem oder mehreren, mineralogisch mehr als 20% Kaolinit enthaltendem Material sowie einem oder mehreren wasserlöslichen und alkalibeständigen organischen Polymeren gekennzeichnet sind. Derartige Kleber sollen eine gute Lagerungsstabilität — bezüglich des Absetzens der Feststoffe — aufweisen und eine hohe Wasserfestigkeit der hiermit hergestellten Klebestellen bedingen.

Wie jedoch aus den Resultaten der nachstehenden Vergleichsversuche ersichtlich ist, ermangelt es beiden Klebern gemäß dem vorstehend diskutierten Stand der Technik sowohl an einer hinreichenden Lagerbeständigkeit hinsichtlich des Absetzverhaltens als auch an der erforderlichen Wasserfestigkeit der erhaltenen Klebung.

Der vorliegenden Erfindung liegt die Aufgabe zugrunde, solche Kleber und/oder Beschichtungsmassen auf Wasserglas-Basis zu entwickeln, die keine der vorstehend erläuterten Nachteile aufweisen und insbesondere zum Kleben und/oder Beschichten von Mineralfaserplatten geeignet sind. Es wurde gefunden, daß eine Kombination der nachstehend genannten anorganischen Füllstoffe — gegebenenfalls unter Zusatz einer wäßrigen Dispersion bestimmter organischer Polymere — zur Lösung der erfindungsgemäßen Aufgabe führt.

Gegenstand der Erfindung sind dementsprechend Kleber und/oder Beschichtungsmassen auf Basis wäßriger Alkalimetallsilikatlösungen mit einem Gehalt an feinteiligen anorganischen Füllstoffen und gegebenenfalls organischen Polymeren, welche dadurch gekennzeichnet sind, daß sie

a) mindestens 30 Gewichtsprozent einer Natrium- und/oder Kaliumsilikatlösung, wobei die Natriumsilikatlösung ein Gewichtsverhältnis von $SiO_2/Na_2O$ von 2,6 bis 3,9 : 1 sowie einen Feststoffgehalt von 28 bis 45 Gewichtsprozent und die Kaliumsilikatlösung ein Gewichtsverhältnis $SiO_2/K_2O$ von 2 bis 2,6 : 1 sowie einen Feststoffgehalt von 28 bis 40 Gewichtsprozent aufweisen,

b) 25 bis 50 Gewichtsprozent feinverteiltes kristallines Calciumcarbonat in Form metamorphen Calcits mit Teilchengrößen im Bereich von 1 bis 45 μm,

c) 2 bis 10 Gewichtsprozent Quarzmehl mit einer Teilchengröße bis 15 μm und einer spezifischen Oberfläche von mindestens 3,5 m²/g,

d) 0 bis 24 Gewichtsprozent einer 50gewichtsprozentigen stabilen wäßrigen Dispersion eines alkalibeständigen organischen Polymeren auf Basis von Acrylat, Styrolacrylat und/oder Styrolbutadien,

bezogen auf die Gesamtzusammensetzung enthalten.

2

Überraschenderweise wurde nämlich gefunden, daß sich die erfindungsgemäßen Kleber und/oder Beschichtungsmassen durch vorteilhafte anwendungstechnische Eigenschaften sowohl im Hinblick auf die Lagerbeständigkeit als auch im Hinblick auf die Wasserfestigkeit der erhaltenen Klebung auszeichnen. Aufgrund der erfindungswesentlichen Kombination von kristallinem Calciumcarbonat und Quarzmehl, mit einer hohen spezifischen Oberfläche, in den angegebenen Grenzen neigen derartige Kleber auch nach längerer Lagerdauer nicht zu störenden Entmischungserscheinungen; vielmehr wird das unerwünschte Absetzen der Feststoffe weitgehend zurückgedrängt. Auf diese Weise lassen sich unreproduzierbare Ergebnisse beim Verkleben oder Beschichten, die zum Beispiel durch ein nachteiliges »Wegschlagen« – das heißt ein vorschnelles Aufsaugen – des flüssigen Klebers in stark saugende Untergründe bedingt sein können, verhindern. Auch hinsichtlich eines unerwünschten Viskositätsanstiegs zeigen derartige Kleber keine wesentlichen Veränderungen.

Diese vorteilhaften Eigenschaften der Kleber sind um so überraschender, da die erfindungsgemäßen Mittel eine beträchtliche Menge an Calciumcarbonat – bezogen auf die Gesamtzusammensetzung – enthalten können. Hervorzuheben ist ferner, daß tonmineralische Stoffe, wie beispielsweise Kaolin, Ton oder Kalk, nicht zu den Bestandteilen der erfindungsgemäßen Kleber zählen.

Vorzugsweise enthalten die erfindungsgemäßen Kleber und/oder Beschichtungsmassen 30 bis 40 Gewichtsprozent, bezogen auf die Gesamtzusammensetzung, feinverteiltes kristallines Calciumcarbonat. Unter »feinverteilt« oder »feinteilig« werden hierbei Teilchengrößen des Calciumcarbonats im Bereich von 1 bis 45 µm, insbesondere von 1 bis 25 µm, verstanden. Die Bestimmung der Teilchengröße kann beispielsweise mit Hilfe eines Coulter-Conter®-Gerätes erfolgen. Zur Verhinderung eines vorzeitigen Aushärtens des Klebers hat es sich als vorteilhaft erwiesen, als kristallines Calciumcarbonat metamorphen Calcit zu verwenden.

Ferner ist es bevorzugt, daß die erfindungsgemäßen Kleber 4 bis 6 Gewichtsprozent, bezogen auf die Gesamtzusammensetzung, Quarzmehl enthalten. Die Bestimmung der spezifischen Oberfläche des Quarzmehls kann zum Beispiel nach der Methode von Brunauer, Emmett und Teller (BET-Methode) vorgenommen werden.

Im Hinblick auf die wäßrige Dispersion organischer Polymerer ist es schließlich bevorzugt, daß die erfindungsgemäßen Kleber 2 bis 5 Gewichtsprozent, bezogen auf die Gesamtzusammensetzung, einer stabilen wäßrigen Dispersion eines alkalibeständigen organischen Polymeren auf Basis von Acrylat, Styrolacrylat und/oder Styrolbutadien enthalten.

Als geeignete organische Polymere kommen hierzu wasserunlösliche handelsübliche Homo- und/oder Copolymerisate von Acrylsäureestern, Styrol/Acrylsäureester-Copolymere oder Styrol/Butadien-Copolymere in Frage, wie sie beispielsweise unter den Bezeichnungen Acronal ® (BASF) oder Mowilith® (Hoechst) vertrieben werden. Durch einen derartigen Zusatz läßt sich die Wasserfestigkeit der mit den erfindungsgemäßen Klebern erhaltenen Klebungen beziehungsweise der getrockneten Beschichtungsmassen wesentlich verbessern. Im Interesse einer erhöhten Flammbeständigkeit der verklebten beziehungsweise beschichteten Fertigprodukte kann jedoch generell auch auf einen Zusatz von organischen Polymeren verzichtet werden.

Die erfindungsgemäßen Kleber und/oder Beschichtungsmassen basieren – wie bereits erwähnt – auf einer wäßrigen Alkalimetallsilikatlösung. Dies bedeutet, daß für die erfindungsgemäßen Mittel sowohl Natronwassergläser als auch Kaliwassergläser sowie entsprechende Mischgläser Verwendung finden können. Im Falle einer Verwendung von Mischgläsern läßt sich das Mischungsverhältnis im allgemeinen innerhalb breiter Grenzen variieren; so kann beispielsweise die Alkalimetallsilikatlösung 2 bis 98 Gewichtsprozent Natriumsilikatlösung und 98 bis 2 Gewichtsprozent Kaliumsilikatlösung enthalten. Bevorzugt ist jedoch hierbei eine Zusammensetzung, die in den Bereichen 10 bis 40 Gewichtsprozent Natriumsilikatlösung und 90 bis 60 Gewichtsprozent Kaliumsilikatlösung liegt.

Im Rahmen der vorstehenden Grenzen ist es erfindungsgemäß bevorzugt, daß die Kleber 40 bis 60 Gewichtsprozent, bezogen auf die Gesamtzusammensetzung, einer Natrium- und/oder Kaliumsilikatlösung enthalten, wobei die Natriumsilikatlösung ein Gewichtsverhältnis $SiO_2/Na_2O$ von 3,3 bis 3,7 : 1 sowie einen Feststoffgehalt von 29 bis 37 Gewichtsprozent und die Kaliumsilikatlösung ein Gewichtsverhältnis $SiO_2/K_2O$ von 2,2 bis 2,6 : 1 sowie einen Feststoffgehalt von 28 bis 35 Gewichtsprozent aufweisen.

Zur Stabilisierung der Alkalimetallsilikatlösung – das heißt zur Vermeidung einer Ausfällung von $SiO_2$ – kann diese gegebenenfalls einen Zusatz einer wasserlöslichen mono- und/oder polyquartären Stickstoffverbindung, die am quartären Stickstoffatom mindestens eine hydroxylgruppenfreie Alkylgruppe aufweist, enthalten. Derartige Stabilisierungsmittel sind beispielsweise in der DE-OS 1 667 538 beschrieben.

Im Hinblick auf die Wasserfestigkeit der zu erzielenden Klebung kann es gegebenenfalls von Vorteil sein, den erfindungsgemäßen Klebern und/oder Beschichtungsmassen bis zu 2 Gewichtsprozent, bezogen auf die Gesamtzusammensetzung, Lithiumhydroxid zuzusetzen. Ferner können die Kleber bis zu 1 Gewichtsprozent an gegenüber Wasserglas inaktiven, feinverteilten, alkalibeständigen Farbpigmenten, wie sie üblicherweise für derartige Zwecke Verwendung finden, enthalten. Als Pigmente kommen hier beispielsweise Titandioxid, Eisenoxid, Chromoxid, Bariumchromat, Kobaltgrün oder -blau sowie Cadmiumselenid oder -sulfid in Frage.

Die erfindungsgemäßen Kleber lassen sich problemlos durch Vermischen der einzelnen Komponenten herstellen. In der Regel wird hierbei die Alkalimetallsilikatlösung, beziehungsweise das Gemisch aus Natrium- und Kaliumsilikatlösung vorgelegt und unter Rühren das Calciumcarbonat sowie das Quarzmehl hinzugefügt. In diese Mischung wird gegebenenfalls die wäßrige Dispersion des organischen Polymeren eingerührt. Der so erhaltene Kleber erweist sich unter Ausschluß von Luft als ausgezeichnet lagerungsbeständig.

Vorzugsweise werden die erfindungsgemäßen Kleber und/oder Beschichtungsmassen zum Kleben und/oder Beschichten von Mineralfaserplatten verwendet. Hierunter ist insbesondere das Kaschieren von Mineralfaserplatten oder -bahnen mit Metallfolien zu verstehen. Darüber hinaus lassen sich die erfindungsgemäßen Kleber jedoch gleichfalls für alle diejenigen Zwecke verwenden, für die Kleber auf Basis wäßriger Alkalimetallsilikatlösungen üblicherweise eingesetzt werden.

In Chemical Abstracts, Vol. 90 (1979), Seite 78, Referat 7770 t, ist ein Kleber bzw. eine Beschichtungsmasse beschrieben, die aus kolloidalem $SiO_2$, einer wäßrigen Polymethacrylatlösung, Kaliumwasserglas, weißem Marmor, Feinsand, Calciumcarbonat, Aluminiumstearat und Pigment besteht. Weder durch die hier angegebenen Mengen der Inhaltsstoffe, noch durch die einzelnen Komponenten dieser Formulierung wird jedoch die erfindungsgemäße Kombination vorbeschrieben noch nahegelegt. Gemäß Iler, »The Chemistry of Silica« (1979), Seite 312, werden beispielsweise unter »kolloidalem $SiO_2$« stabile Dispersionen oder Sole diskreter Teilchen von amorphen $SiO_2$ verstanden; diese Definition schließt mithin das erfindungsgemäß zu verwendende Quarzmehl aus. Auch weitere Zitate aus Iler — Seiten 592 und 587 — liefern keinen Hinweis auf die erfindungsgemäßen Kleber und/oder Beschichtungsmassen. Ferner ist aus der US-PS 3 926 657 ein Klebstoff auf Wasserglas-Basis bekannt, der einen Gehalt an Calciumcarbonat aufweist. Derartige Klebstoffe müssen jedoch bis zum Auftragen auf die zu verklebenden Flächen ständig gerührt werden, um ein Absetzen des Calciumcarbonats zu verhindern. Diese Aussagen der US-Patentschrift stehen mithin im Widerspruch zu der Aufgabenstellung der vorliegenden Anmeldung, nämlich lagerstabile Wasserglaskleber zu schaffen, die auch ohne ständiges Rühren keinerlei Absetzen bzw. Entmischen zeigen.

In den nachstehenden Beispielen werden Kleber und/oder Beschichtungsmassen im Sinne der Erfindung näher erläutert.

## Beispiel 1

Der erfindungsgemäße Kleber weist die folgende Zusammensetzung auf:

| | |
|---|---|
| 50 Gew.-% | einer wäßrigen Alkalimetallsilikatlösung, enthaltend: |
| | 45,5 Gew.-% Kaliwasserglas mit einem Gewichtsverhältnis $SiO_2/K_2O$ von 2,6 und einem Feststoffgehalt von 28,5 Gew.-%, 30 Gew.-% Natronwasserglas mit einem Gewichtsverhältnis $SiO_2/Na_2O$ von 3,3 und einem Feststoffgehalt von 36 Gew.-%, |
| 36 Gew.-% | kristallines Calciumcarbonat mit Teilchengrößen im Bereich von 1 bis 25 µm, |
| 4 Gew.-% | Quarzmehl mit Teilchengrößen bis zu 15 µm und einer spezifischen Oberfläche von 4,5 m²/g, |
| 5 Gew.-% | einer 50gew.-%igen wäßrigen Polyacrylsäureester-Dispersion, |
| 5 Gew.-% | entionisiertes Wasser. |

Der Kleber wird — wie vorstehend beschrieben — durch Einrühren der anorganischen Feststoffe sowie der Dispersion des organischen Polymeren in die vorgelegte Wasserglaslösung erhalten. Das fertige Gemisch wird bis zur völligen Homogenisierung weiter gerührt. Die Viskosität des Klebers wurde sowohl im Anschluß an die Herstellung als auch nach einer vierwöchigen Lagerzeit im geschlossenen Gefäß mit einem Rotationsviskosimeter (Rotavisko der Firma Haake KG, Berlin) überprüft; sie blieb praktisch unverändert.

Die Prüfung des Absetzverhaltens des Klebers wurde in der folgenden Weise vorgenommen: in einem graduierten Standzylinder werden 250 ml des gut homogenisierten Klebers eingefüllt und die Feststoff-Sedimentation über einen Zeitraum von 4 Wochen im verschlossenen Zylinder beobachtet. Das Eintreten einer Sedimentation der Feststoffe zeigt sich in einer deutlich sichtbaren Phasentrennung von überstehender klarer Lösung einerseits und dem sich absetzenden Füllstoffanteil andererseits, wobei die Verwendung des graduierten Standzylinders ein Ablesen der jeweiligen Mengen (in ml) erlaubt. Bei dieser Prüfmethode ist es gegebenenfalls erforderlich — beispielsweise im Falle stark sedimentierender Füllstoffe — stündlich oder in noch kürzeren Zeitabständen den Anteil der jeweiligen Phasen abzulesen; ansonsten genügt eine tägliche Kontrolle.

Im Falle des vorliegenden erfindungsgemäßen Klebers zeigte sich nach einer Dauer von 24 Stunden eine Phasentrennung in 10 ml überstehender klarer Lösung und 240 ml restlichem füllstoffhaltigen Kleber. Eine weitere wesentliche Veränderung wurde auch nach längerer Prüfdauer nicht beobachtet.

Die Wasserbeständigkeit eines mit erfindungsgemäßem Kleber erhaltenen Klebefilms wird in folgender Weise überprüft: Auf eine Aluminiumfolie mit den Abmessungen $10 \times 10$ cm wird eine Kleber-Beschichtung von ungefähr 1 mm Schichtstärke mit einer Rakel aufgetragen und die Folie zum Abbinden des Klebers 24 Stunden bei Raumtemperatur gelagert. Anschließend wird die Folie in eine

0 041 212

mit Wasser gefüllte Schale eingelegt — wobei der Klebefilm nach oben weist — und mit fließendem Wasser bespült. Hierbei sollte der Wasserstrahl nicht unmittelbar auf den Klebefilm auftreffen. Ein Auflösen des Klebefilms durch mangelnde Wasserbeständigkeit desselben wird manuell — das heißt durch leichtes Reiben mit dem Finger über den Film — geprüft. Diese Prüfung erfolgt während der ersten Stunde im Abstand von 15 Minuten, danach stündlich.

Ein mit dem erfindungsgemäßen Kleber gebildeter Klebefilm erwies sich bei dieser Prüfung noch nach 6 Stunden als beständig und wasserfest.

Vergleichsversuch A

Zu diesem Vergleichsversuch wurde ein Kleber entsprechend dem Beispiel 2 der DE-AS 2 460 543 hergestellt. Der Kleber wies die folgende Zusammensetzung auf:

89,5 Gew.-% Natronwasserglas mit einem Molverhältnis $SiO_2/Na_2O$ von 3,3 : 1 und einem Feststoffgehalt von 25 Gew.-%,
8 Gew.-% Kaolin (Teilchengröße < 10 μm),
2,5 Gew.-% Zinkoxid (Teilchengröße < μm).

Die Prüfung der Wasserbeständigkeit — analog Beispiel 1 — eines mit diesem Kleber erzeugten Klebefilms ergab eine vollständige Auflösung der Beschichtung bereits nach 15 Minuten. Bei der Prüfung des Absetzverhaltens — gleichfalls analog Beispiel 1 — resultierte nach einer Dauer von 24 Stunden eine Phasentrennung in 160 ml überstehende klare Lösung und 90 ml Feststoff mit restlichem Kleber.

Vergleichsversuch B

Zu diesem Vergleichsversuch wurde ein Kleber entsprechend dem Beispiel 2 der DE-OS 2 729 194 hergestellt. Der Kleber wies die folgende Zusammensetzung auf:

79,5 Gew.-% Natronwasserglas mit einem Gewichtsverhältnis $SiO_2/Na_2O$ von 3,3 : 1 und einem Feststoffgehalt von 36,5 Gew.-%,
10 Gew.-% einer 6gew.-%igen Polymetacrylatlösung,
9 Gew.-% Kaolin,
1,5 Gew.-% Natriumaluminat.

Die Prüfung der Wasserbeständigkeit — analog Beispiel 1 — eines mit diesem Kleber erzeugten Klebefilms ergab ein Auflösen der Beschichtung nach 15 Minuten. Bei der Prüfung des Absetzverhaltens — gleichfalls analog Beispiel 1 — resultierte nach einer Dauer von 24 Stunden eine Phasentrennung in 150 ml überstehende Lösung und 100 ml Feststoff.

Ein Vergleich der beiden vorstehenden Vergleichsversuche mit Beispiel 1 zeigt das erheblich verbesserte Absetzverhalten — und damit die verbesserte Lagerbeständigkeit — des erfindungsgemäßen Klebers sowie die wesentlich erhöhte Wasserfestigkeit der mit diesem Kleber erhaltenen Beschichtung.

Die in den nachstehenden Beispielen beschriebenen erfindungsgemäßen Kleber-Formulierungen weisen vergleichbar gute Eigenschaften hinsichtlich Absetzverhalten und Wasserfestigkeit auf.

Beispiel 2

50 Gew.-% einer wäßrigen Alkalimetallsilikatlösung, enthaltend:
45,5 Gew.-% Kaliwasserglas mit einem Gewichtsverhältnis $SiO_2/Na_2O$ von 2,6 und einem Feststoffgehalt von 28,5 Gew.-%, 30 Gew.-% Natronwasserglas mit einem Gewichtsverhältnis $SiO_2/Na_2O$ von 3,3 und einem Feststoffgehalt von 36 Gew.-%,
34 Gew.-% kristallines Calciumcarbonat mit Teilchengrößen im Bereich von 1 bis 25 μm,
6 Gew.-% Quarzmehl mit Teilchengrößen bis zu 15 μm und einer spezifischen Oberfläche von 4,5 m²/g,
5 Gew.-% einer 50gew.-%igen wäßrigen Polyacrylsäureester-Dispersion,
5 Gew.-% entionisiertes Wasser.

5

## Beispiel 3

| | |
|---|---|
| 53 Gew.-% | einer wäßrigen Alkalimetallsilikatlösung, enthaltend: |
| | 45,5 Gew.-% Kaliwasserglas mit einem Gewichtsverhältnis $SiO_2/K_2O$ von 2,6 und einem Feststoffgehalt von 28,5 Gew.-%, 30 Gew.-% Natronwasserglas mit einem Gewichtsverhältnis $SiO_2/Na_2O$ von 3,3 und einem Feststoffgehalt von 36 Gew.-%, |
| 30 Gew.-% | kristallines Calciumcarbonat mit Teilchengrößen im Bereich von 1 bis 25 μm, |
| 10 Gew.-% | Quarzmehl mit Teilchengrößen bis zu 15 μm und einer spezifischen Oberfläche von 3,5 m²/g, |
| 2 Gew.-% | einer 50gew.-%igen wäßrigen Polyacrylsäureester-Dispersion, |
| 5 Gew.-% | entionisiertes Wasser. |

## Beispiel 4

| | |
|---|---|
| 40 Gew.-% | einer wäßrigen Natriumsilikatlösung mit einem Gewichtsverhältnis $SiO_2/Na_2O$ von 2,8 und einem Feststoffgehalt von 45 Gew.-%, |
| 27,9 Gew.-% | kristallines Calciumcarbonat mit Teilchengrößen im Bereich von 1 bis 25 μm, |
| 3,1 Gew.-% | Quarzmehl mit Teilchengrößen bis zu 15 μm und einer spezifischen Oberfläche von 3,5 m²/g, |
| 24 Gew.-% | einer 50gew.-%igen wäßrigen Styrol/Polyacrylsäureester-Dispersion, |
| 5 Gew.-% | entionisiertes Wasser. |

## Beispiel 5

| | |
|---|---|
| 70 Gew.-% | einer wäßrigen Kaliumsilikatlösung mit einem Gewichtsverhältnis $SiO_2/K_2O$ von 2,6 und einem Feststoffgehalt von 29,1 Gew.-%, |
| 28 Gew.-% | kristallines Calciumcarbonat mit Teilchengrößen im Bereich von 1 bis 25 μm, |
| 2 Gew.-% | Quarzmehl mit Teilchengrößen bis zu 15 μm und einer spezifischen Oberfläche von 3,5 m²/g. |

**Patentansprüche**

1. Kleber und/oder Beschichtungsmassen auf Basis wäßriger Alkalimetallsilikatlösungen mit einem Gehalt an feinteiligen anorganischen Füllstoffen und gegebenenfalls organischen Polymeren, dadurch gekennzeichnet, daß sie

a) mindestens 30 Gewichtsprozent einer Natrium- und/oder Kaliumsilikatlösung, wobei die Natriumsilikatlösung ein Gewichtsverhältnis von $SiO_2/Na_2O$ von 2,6 bis 3,9 : 1 sowie einen Feststoffgehalt von 28 bis 45 Gewichtsprozent und die Kaliumsilikatlösung ein Gewichtsverhältnis $SiO_2/K_2O$ von 2 bis 2,6 : 1 sowie einen Feststoffgehalt von 28 bis 40 Gewichtsprozent aufweisen,

b) 25 bis 50 Gewichtsprozent feinverteiltes kristallines Calciumcarbonat in Form metamorphen Calcits mit Teilchengrößen im Bereich von 1 bis 45 μm,

c) 2 bis 10 Gewichtsprozent Quarzmehl mit einer Teilchengröße bis 15 μm und einer spezifischen Oberfläche von mindestens 3,5 m²/g,

d) 0 bis 24 Gewichtsprozent einer 50gewichtsprozentigen stabilen wäßrigen Dispersion eines alkalibeständigen organischen Polymeren auf Basis von Acrylat, Styrolacrylat und/oder Styrolbutadien,

bezogen auf die Gesamtzusammensetzung, enthalten.

2. Kleber und/oder Beschichtungsmassen nach Anspruch 1, dadurch gekennzeichnet, daß sie 30 bis 40 Gewichtsprozent, bezogen auf die Gesamtzusammensetzung, feinverteiltes kristallines Calciumcarbonat in Form metamorphen Calcits, mit Teilchengrößen im Bereich von 1 bis 25 μm enthalten.

3. Kleber und/oder Beschichtungsmassen nach Anspruch 1, dadurch gekennzeichnet, daß sie 4 bis 6 Gewichtsprozent, bezogen auf die Gesamtzusammensetzung, an Quarzmehl enthalten.

4. Kleber und/oder Beschichtungsmassen nach Anspruch 1, dadurch gekennzeichnet, daß sie 2 bis 5 Gewichtsprozent, bezogen auf die Gesamtzusammensetzung, der Dispersion eines organischen Polymeren enthalten.

5. Kleber und/oder Beschichtungsmassen nach Anspruch 1 bis 4, dadurch gekennzeichnet, daß sie 40 bis 60 Gewichtsprozent, bezogen auf die Gesamtzusammensetzung, einer Natrium- und/oder Kaliumsilikatlösung enthalten, wobei die Natriumsilikatlösung ein Gewichtsverhältnis $SiO_2/Na_2O$ von 3,3 bis 3,7 : 1 sowie einen Feststoffgehalt von 29 bis 37 Gewichtsprozent und die Kaliumsilikatlösung ein Gewichtsverhältnis SiO$_2$/K$_2$O von 2,2 bis 2,6 : 1 sowie einen Feststoffgehalt an 28 bis 35 Gewichtsprozent aufweisen.

6. Kleber und/oder Beschichtungsmassen nach Anspruch 1 bis 5, dadurch gekennzeichnet, daß sie bis zu 2 Gewichtsprozent Lithiumhydroxid enthalten.

7. Verwendung der Kleber und/oder Beschichtungsmassen nach Anspruch 1 bis 6 zum Kleben und/oder Beschichten von Mineralfaserplatten.


**Claims**

1. Adhesives and/or coating compositions based on aqueous alkali metal silicate solutions containing finely particulate inorganic fillers and, optionally, organic polymers, characterized in that they contain

a) at least 30% weight of a sodium and/or potassium silicate solution, the sodium silicate solution having a ratio by weight of SiO$_2$ to Na$_2$O of from 2.6 to 3.9 : 1 and a solids content of from 28 to 45% by weight and the potassium silicate solution having a ratio by weight of SiO$_2$ to K$_2$O of from 2 to 2.6 : 1 and a solids content of from 28 to 40% by weight,
b) from 25 to 50% by weight of finely particulate crystalline calcium carbonate in the form of metamorphic calcite with particle sizes in the range from 1 to 45 μm,
c) from 2 to 10% by weight of quartz powder with a particle size of up to 15 μm and a specific surface of at least 3.5 m$^2$/g,
d) from 0 to 24% by weight of a 50% by weight stable aqueous dispersion of an alkali-stable organic polymer based on acrylate, styrene acrylate and/or styrene butadiene,

based on the composition as a whole.

2. Adhesives and/or coating compositions as claimed in Claim 1, characterized in that they contain from 30 to 40% by weight, based on the composition as a whole, of finely particulate, crystalline calcium carbonate in the form of metamorphic calcite with particle sizes in the range from 1 to 25 μm.

3. Adhesives and/or coating compositions as claimed in Claim 1, characterized in that they contain from 4 to 6% by weight, based on the composition as a whole, of quartz powder.

4. Adhesives and/or coating compositions as claimed in Claim 1, characterized in that they contain from 2 to 5% by weight, based on the composition as a whole, of a dispersion of an organic polymer.

5. Adhesives and/or coating compositions as claimed in Claims 1 to 4, characterized in that they contain from 40 to 60% by weight, based on the composition as a whole, of a sodium and/or potassium silicate solution, the sodium silicate solution having a ratio by weight of SiO$_2$ to Na$_2$O of from 3.3 to 3.7 : 1 and a solids content of from 29 to 38% by weight and the potassium silicate solution having a ratio by weight of SiO$_2$ to K$_2$O of from 2.2 to 2.6 : 1 and a solids content of from 28 to 35% by weight.

6. Adhesives and/or adhesive compositions as claimed in Claim 1 to 5, characterized in that they contain up to 2% by weight of lithium hydroxide.

7. The use of the adhesives and/or coating compositions claimed in Claims 1 to 6 for bonding and/or coating mineral fiber boards.

.


**Revendications**

1. Adhésifs et/ou masses de revêtement à base de solutions aqueuses de silicates de métaux alcalins ayant une teneur en matières de charge minérales finement divisées et éventuellement en polymères organiques, caractérisée en ce qu'ils contiennent:

a) au moins 30% en poids d'une solution de silicate de sodium et/ou de potassium, la solution de silicate de sodium présentant un rapport pondéral SiO$_2$/Na$_2$O de 2,6 à 3,9 : 1 ainsi qu'une teneur en matière solide de 28 à 45% en poids et la solution de silicate de potassium ayant un rapport pondéral SiO$_2$/K$_2$O de 2 à 2,6 : 1 de même qu'une teneur en matière solide de 28 à 40% en poids,
b) 25 à 50% en poids de carbonate de calcium cristallin finement divisé sous forme de calcite métamorphique ayant des dimensions de particule dans l'intervalle de 1 à 45 μm,
c) 2 à 20% en poids de farine de quartz ayant une dimension de particule allant jusqu'à 15 μm et une surface spésifique d'au moins 3,5 m$^2$/g,
d) 0 à 24% en poids d'une dispersion aqueuse stable à 50% en poids d'un polymère organique résistant aux alcalis à base d'acrylate, de styrène acrylate et/ou de styrène butadiène,

par rapport à la composition totale.

2. Adhésifs et/ou masses de revêtement selon la revendication 1, caractérisés en ce qu'ils contiennent 30 à 40% en poids, par rapport à la composition totale, de carbonate de calcium cristallin

**0 041 212**

finement divisé sous forme de calcite métamorphique, ayant des dimensions de particule dans l'intervalle de 1 à 25 μm.

3. Adhésifs et/ou masses de revêtement selon la revendication 1, caractérisés en ce qu'ils contiennent 4 à 6% en poids de farine de quartz par rapport à la composition totale.

4. Adhésifs et/ou masses de revêtement selon la revendication 1, caractérisés en ce qu'ils contiennent 2 à 5% en poids, par rapport à la composition totale, de la dispersion d'un polymère organique.

5. Adhésifs et/ou masses de revêtement selon les revendications 1 à 4, caractérisés en ce qu'ils contiennent 40 à 60% en poids, par rapport à la composition totale, d'une solution de silicate de sodium et/ou de potassium, la solution de silicate de sodium présentant un rapport pondéral $SiO_2/Na_2O$ de 3,3 à 3,7 : 1 de même qu'une teneur en matière solide de 29 à 37% en poids et la solution de silicate de potassium présentant un rapport pondéral de $SiO_2/K_2O$ de 2,2 à 2,6 : 1 de même qu'une teneur en matière solide de 28 à 35% en poids.

6. Adhésifs et/ou masses de revêtement selon les revendications 1 à 5, caractérisés en ce qu'ils contiennent jusqu'à 2% en poids d'hydroxyde de lithium.

7. Utilisation des adhésifs et/ou masses de revêtement selon les revendications 1 à 6 pour le collage et/ou le revêtement de plaques fibreuses minérales.

8